# EUROPÄISCHE PATENTSCHRIFT

(11) **EP 1 467 050 B1**
(45) Veröffentlichungstag und Bekanntmachung des Hinweises auf die Patenterteilung: **17.02.2010**
(21) Anmeldenummer: 04006779.5
(22) Anmeldetag: 20.03.2004
(51) Int. Cl.: E05B 65/20

(54) **Schlossmodul für eine Kraftfahrzeugtür**
Lock module for a motor vehicle door
Module de serrure pour portière de véhicule automobile

(30) Priorität: 01.04.2003 DE 10314839
(43) Veröffentlichungstag der Anmeldung: 13.10.2004
(73) Patentinhaber: Kiekert Aktiengesellschaft, 42579 Heiligenhaus (DE)
(72) Erfinder: Becker, Arne, 47138 Duisburg (DE); Serbetci, Selcuk, 40883 Ratingen (DE)

(56) Entgegenhaltungen:
- EP-A- 0 508 580
- EP-A- 1 101 891
- DE-A1- 10 032 499
- DE-A1- 10 048 706
- DE-A1- 10 221 399
- DE-A1- 19 738 796
- DE-A1- 19 823 580
- US-B1- 6 189 267

## Beschreibung

Die Erfindung betrifft ein Schloßmodul für eine Kraftfahrzeugtür, mit einem Türschloß und einer Adapterplatte sowie einem Verbindungselement für diese Aggregate. "Schloßmodul" meint dabei im wesentlichen die Komponenten Schloß, Adapterplatte, auch als Griffplatte bezeichnet oder als Griff- oder Lagerbügel ausgestaltet, sowie das Verbindungselement.

Solche Schloßmodule erleichtern die Montage der einzelnen Aggregate in die Fahrzeugtür, da diese auf dem Verbindungselement angeordnet in die Tür eingeführt werden. Das Türschloß wird dabei an der Stirninnenseite des Türbleches befestigt. Die Adapterplatte wird an der entsprechenden Öffnung im Türaußenblech für die Aufnahme des Türaußengriffes angeordnet. Sowohl das Türaußenblech als auch das Türinnenblech weisen fertigungsbedingt Toleranzen auf. Diese Toleranzen wirken sich sowohl in Fahrzeuglängsrichtung als auch in Fahrzeugquorrichtung sowie in der Höhe aus und müssen bei der Montage der Elemente ausgeglichen werden.

Hierzu schlägt die nicht vorveröffentlichte DE 102 56 755.7 vor, ein bogenförmig ausgestaltetes Verbindungselement zu verwenden, das an dem dem Türschloß zugeordneten Ende ein erstes Befestigungselement aufweist, welches das Verbindungselement und das Türschloß verschiebbar miteinander befestigt, und das an dem der Adapterplatte des Türaußengriffes zugeordneten Ende ein zweites Befestigungselement aufweist, welches das Verbindungselement und die Adapterplatte verschiebbar miteinander befestigt. Das bogenförmige Verbindungselement verbindet das Türschloß und die Adapterplatte derart, daß eine vorgefertigte, prüfbare Montageeinheit entsteht, die leicht baut.

Aus der DE 100 32 499 A1, von der die Erfindung ausgeht, ist ein Schloßmodul gemäß dem Oberbegriff des Anspruchs 1 für eine Kraftfahrzeugtür bekannt, mit einem Türschloß, einer Adapterplatte für den Türaußengriff und einem Verbindungselement für diesen beiden Aggregate, wobei am Verbindungselement ein Anschlußstück angeordnet ist, das verschiebebeweglich relativ zum Schloss und zur Adapterplatte ist.

Die Aufgabe der vorliegenden Erfindung ist es, das Schloßmodul und insbesondere das Verbindungselement weiter zu verbessern, so daß auch für Kraftfahrzeugtüren, insbesondere Schiebetüren, mit sehr engem Bauraum für das Türschloß und die Griffeinbindung ein in drei Dimensionen Fertigungstoleranzen ausgleichendes, die Schloß-/Griff-Montage vereinfachendes und die Außenverriegelungs-Anbindung sicherstellendes Verbindungselement bereitgestellt wird, das zwischen Schloß und Griffplatte wirkt.

Diese Aufgabe wird durch ein Schloßmodul nach dem Anspruch 1 gelöst. Vorteilhafte Ausgestaltungen sind Gegenstand der rückbezogenen Unteransprüche.

Erfindungsgemäß ist ein Schlossmodul für eine Kraftfahrzeugtür vorgeshen, mit einem Türschloss, einer Adapterplatte für den Türaußengriff und einem Verbindungselement für diese beiden Aggregate, dass am Verbindungselement ein Anschlußstück angeordnet ist, das verschiebebeweglich relativ zum Schloss oder zur Adapterplatte ist, und dass das Verbindungselement eine Scharniereinrichtung aufweist, mittels derer das Türschloss relativ zu der Adapterplatte verschwenkbar ist, wobei die Scharniereinrichtung mindestens einen Zapfen aufweist, der in eine komplementäre Aufnahme entweder an der Adapterplatte oder am Türschloss eingreift, wobei an dem Verbindungselement ein Arm angeflanscht ist, an dem ein Außenverriegelungshebel anzubringen ist, und dass die Anbindung des Außenverriegelungshebels über einen Kugelkopf erfolgt.

Dabei kann das Anschlußstück eine erste Einrichtung aufweisen, die senkrecht zur Verschieberichtung nachgiebig verlagerbar ist und weiterhin eine zweite Einrichtung, die orthogonal zur Verschieberichtung und zur Verlagerungsrichtung der ersten Einrichtung nachgiebig verlagerbar ist. Die erste und die zweite Einrichtung können nach baulichen Varianten auch an dem Schloß oder an der Adapterplatte vorgesehen sein.

Die erste und zweite nachgiebig verlagerbare Einrichtung ist dabei jeweils aus mindestens einem Federband gebildet. Es kann das Anschlußstück eine Nut aufweisen, die über ein Gegenstück am Schloß oder an der Adapterplatte zu schieben ist. Dabei kann an zwei einander gegenüberliegenden Seiten der Nut jeweils ein Federband angeordnet sein, um die erste nachgiebig verlagerbare Einrichtung zu bilden. Auch an der Oberseite der Nut kann ein Federband angeordnet sein, das dann die zweite nachgiebig verlagerbare Einrichtung zur Verfügung stellt. Das Anschlußstück ist vorteilhaft einstückig mit dem Verbindungselement ausgebildet.

Im Sinne der kinematischen Umkehr kann auch vorgesehen sein, daß ein Gegenstück am Schloß oder an der Adapterplatte eine Nut zum Schieben über das Anschlußstück und/oder einander gegenüberliegend an zwei Seiten angeordnete Federbänder und/oder ein Federband an seiner Oberseite aufweist.

Bevorzugt sind für die Scharniereinrichtung zwei einander gegenüberstehende, voneinander beabstandete Zapfen vorgesehen, die jeweils in eine Aufnahme eingreifen. Die Zapfen können dabei am Verbindungselement aufeinander zu bewegbar angeordnet sein. Vorzugsweise ist die mindestens eine Aufnahme an der Adapterplatte vorgesehen. Das Gegenstück wäre dann am Schloß anzuordnen.

Bei einem Schloßmodul der eingangs genannten Gattung kann auch vorgesehen sein, daß der Kugelkopf an einem Koppelelement angebracht ist, das in einer Bohrung in dem Arm sitzt. Das Koppelelement kann weiterhin eine Vertiefung aufweisen, in die eine Außenverriegelung, beispielsweise ein Schließzylinder, formschlüssig eingreift.

Im folgenden soll die Erfindung lediglich beispielhaft anhand der beigefügten Zeichnung näher erläutert werden. Es zeigt:
- Figur 1: eine perspektivische Ansicht eines Verbindungselements für ein Schloßmodul nach einem Ausführungsbeispiel gemäß der vorliegenden Erfindung;
- Figur 2: eine weitere perspektivische Ansicht des Verbindungselements, gegenüber der Figur 1 um 90° im Uhrzeigersinn gedreht;
- Figur 3: ein Anschlußstück an einem Verbindungselement für ein Schloßmodul gemäß einem Ausführungsbeispiel der vorliegenden Erfindung, aufgesetzt auf ein am Türschloß angebrachtes Gegenstück;
- Figur 4: das Anschlußstück der Figur 3 in einer Ansicht von unten;
- Figur 5: eine stirnseitige Ansicht des auf dem Gegenstück sitzenden Anschlußstückes;
- Figur 6: ein Verbindungselement mit einer Scharniereinrichtung nach einem Ausführungsbeispiel der Erfindung;
- Figur 7: eine Adapterplatte, die zur Aufnahme der Scharniereinrichtung nach Figur 6 gestaltet ist;
- Figur 8: die an die Adapterplatte angesetzte Scharniereinrichtung;
- Figur 9: ein Schloßmodul gemäß einem Ausführungsbeispiel der Erfindung mit Adapterplatte, Schloß und Verbindungselement;
- Figur 10: ein Verbindungselement mit Anbindung für den Außenverriegelungshebel und einen Schließzylinder;
- Figur 11: eine Detailansicht des Verbindungselementes; und
- Figur 12: ein Schloßmodul gemäß einem Ausführungsbeispiel der Erfindung, mit Adapterplatte, Schloß und Schließzylinder.

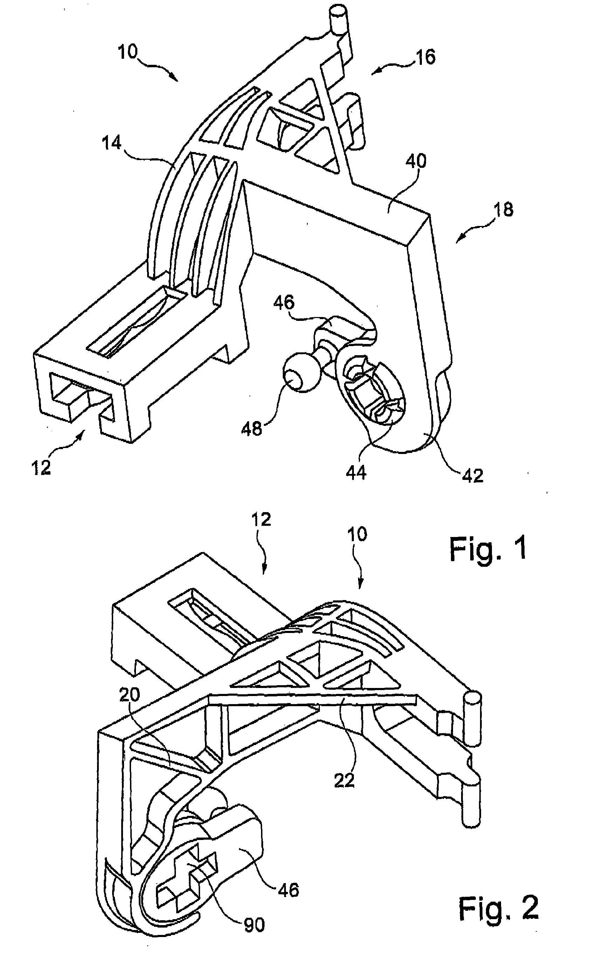

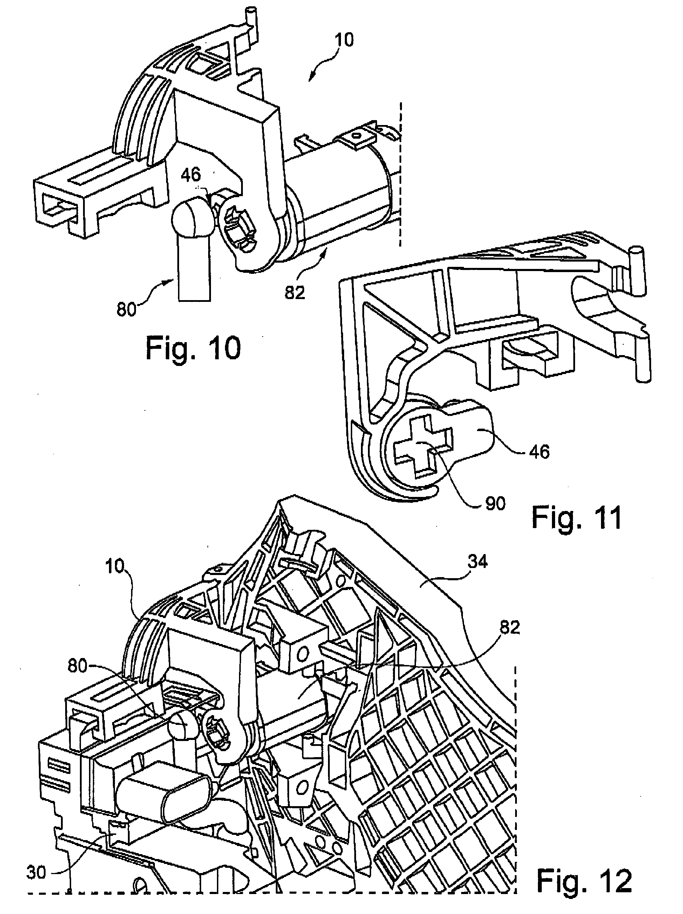

Das in Figur 1 dargestellte Verbindungselement 10 für ein Schloßmodul gemäß einem Ausführungsbeispiel der vorliegenden Erfindung weist im wesentlichen einen bogenförmigen Abschnitt 14 auf, an dem an der in Figur 1 dem Betrachter zugewandten Seite ein Anschlußstück 12 vorgesehen ist, das einstückig mit dem bogenförmigen Abschnitt 14 ausgebildet ist. An der gegenüberliegenden Seite des bogenförmigen Abschnittes 14 ist eine Schamiereinrichtung 16 vorgesehen. Ebenfalls einstückig mit dem bogenförmigen Abschnitt 14 ausgebildet ist eine Kopplungseinrichtung 18 für die Außenverriegelung, die aus einem Arm 40 besteht, der sich senkrecht von dem bogenförmigen Abschnitt 14 erstreckt. Der Arm 40 ist abgewinkelt und trägt an seinem unteren Ende 42 in einer Bohrung 44 ein Kopplungselement 46 für eine Außenverriegelung. Deren Anbindung wird im Zusammenhang mit den Figuren 10 bis 12 näher beschrieben.

In Figur 2 ist zu erkennen, daß das Verbindungselement 10, welches aus Kunststoff, beispielsweise Polybutylentherephthalat, besteht, so gestaltet ist, daß bei sichergestellter Stabilität möglichst materialsparend hergestellt werden kann. Dazu sind Verstärkungsstreben, beispielsweise bei 20, 22 vorgesehen, die besonders belastete Bereiche des Verbindungselementes 10 überbrücken. Ein bevorzugtes Herstellungsverfahren für das Verbindungselement ist der Spritzguß.

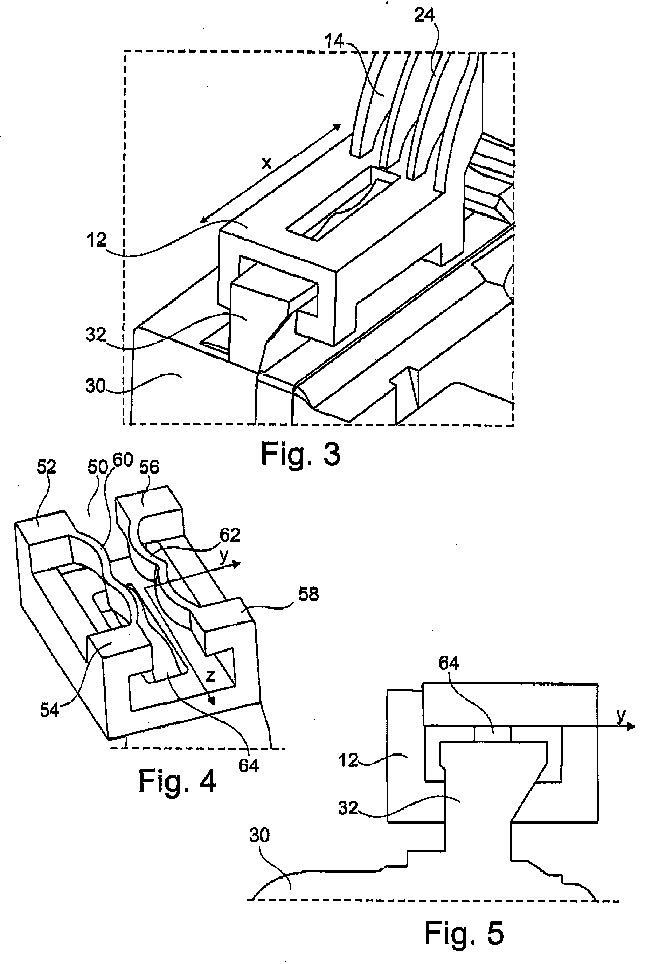

Figur 3 zeigt das Anschlußstück 12, das über vier voneinander beabstandete Rippen, beispielsweise 24, mit dem bogenförmigen Abschnitt 14 verbunden ist. Das Anschlußstück 12 sitzt auf einem Gegenstück 32 am Schloß 30. Damit das Verbindungselement 10 für einen Toleranzausgleich sorgen kann, weist es, wie in Figur 4 dargestellt, eine Nut 50 auf, die am vorderen und hinteren Ende durch L-förmige Stücke 52, 54, 56, 58 begrenzt ist. Der Raum zwischen dem L-förmigen Stück 52 und dem Stück 54 sowie der Raum zwischen dem L-förmigen Stück 56 und dem Stück 58 ist jeweils durch ein Federband 60 bzw. 62 oder eine Federplatte überbrückt. Jedes der Federbänder 60 bzw. 62 oder Federplatten weist dabei eine doppelt bogenförmige Krümmung auf, so daß die Federbänder 60, 62 in die Nut 50 hineinragen, aus dieser aber nachgiebig verlagerbar sind. Ein weiteres Federband 64 ist an der Oberseite des Anschlußstückes 12 vorgesehen (in der Darstellung der Figur 4 unten liegend), das ebenfalls nachgiebig verlagerbar in den Raum der Nut 50 ragt. Die Federbänder 60, 62, 64 sorgen für einen Toleranzausgleich senkrecht bzw. orthogonal zur Längsrichtung der Nut 50. Figur 5 zeigt, wie das Federband 64 auf das Gegenstück 32 des Schlosses drückt.

Im Einbauzustand, am besten in Figur 3 zu sehen, ist das Verbindungselement 10 über sein auf dem Gegenstück sitzendem Anschlußstück 12 in der Richtung quer zur Fahrzeugfahrtrichtung (x-Richtung) verschiebbar und gleicht Toleranzen in Fahrzeugfahrtrichtung (y-Richtung) sowie lotrecht zur Fahrzeugfahrtrichtung (z-Richtung) aus.

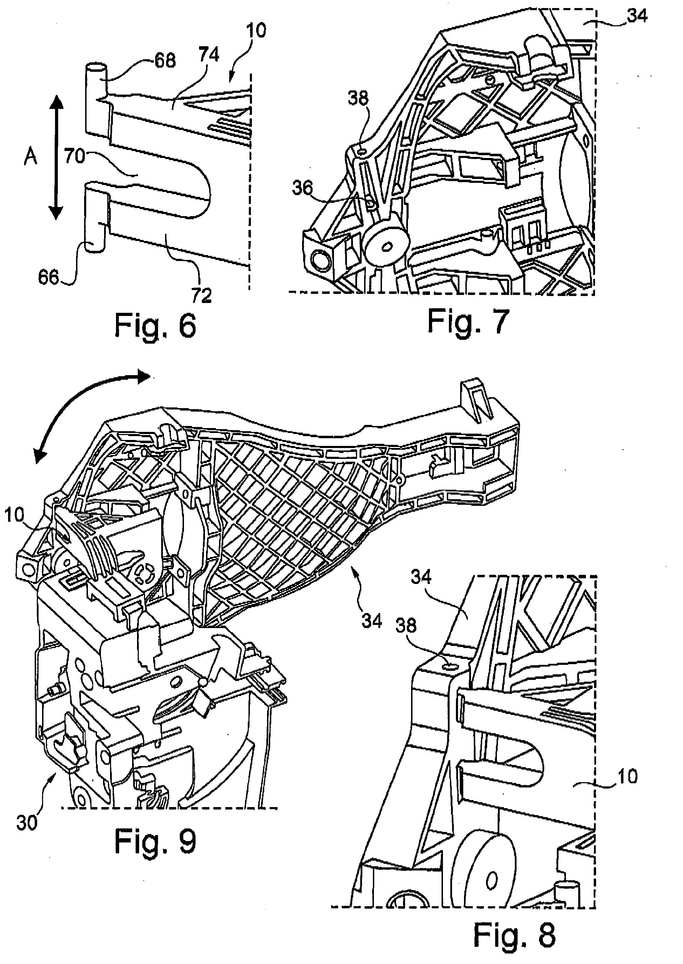

Figur 6 zeigt eine Scharniereinrichtung 16 an einem Verbindungselement 10 gemäß einem Ausführungsbeispiel der vorliegenden Erfindung. Die Scharniereinrichtung 16 besteht aus zwei Zapfen 66, 68, die miteinander ausgerichtet auf beiden Seiten einer Aussparung 70 angeordnet sind. Die Aussparung 70 bewirkt, zusammen mit der Eigenelastizität des Kunststoffmaterials, daß die benachbarten Kunststoffabschnitte 72, 74, an deren distalen äußeren Enden die Zapfen 66, 68 angeordnet sind, in Richtung des Pfeiles A relativ zueinander bewegbar sind; so kann man sie zusammendrücken, damit die Zapfen 66, 68 sich nähern und in entsprechende Ausnehmungen, wie in Zusammenhang mit den Figuren 7 und 8 noch beschrieben wird, eingesetzt werden können. In Figur 7 sind zwei in die Adapterplatte 34 gegenüberstehende Bohrungen 36, 38 gezeigt, die zur Aufnahme der Zapfen 66 bzw. 68 dienen sollen. Figur 8 zeigt, wie das Verbindungselement 10 mit der Scharniereinrichtung bzw. den Zapfen 66, 68 verliersicher in der Adapterplatte 34 sitzt. Jetzt kann, wie in Figur 9 veranschaulicht, das Schloß 30 in bezug auf die Adapterplatte 34 verschwenkt werden, so daß die Montage in dem engen Bauraum der Kraftfahrzeugtür vereinfacht wird.

Figur 10 zeigt die Anbindung der Außenverriegelung, hier bestehend aus einem Schließzylinder 82, an das Verbindungselement 10. Wie schon im Zusammenhang mit Figur 1 erläutert, ist dazu ein sich vom bogenförmigen Abschnitt 14 erstreckender Arm 40 vorgesehen, der abgewinkelt ist und an seinem unteren Ende 42 in einer Bohrung 44 ein Kopplungselement 46 zeigt. Das Kopplungselement 46 weist an seinem freiliegenden Ende einen Kugelkopf 48 auf, auf den, wie in Figur 10 zu sehen ist, ein entsprechendes Anschlußstück eines Außenverriegelungshebels 80 aufzusetzen ist, wobei das Anschlußstück den Kugelkopf 48 zwar übergreift, aber relativ zu ihm beweglich bleibt, so daß auch hier Fertigungstoleranzen ausgeglichen werden können. Auf der dem Kugelkopf 48 gegenüberliegenden Seite, in der Bohrung 44, weist das Kopplungselement 46 eine kreuzförmige Vertiefung 90 auf, deutlich in Figur 11 und auch in Figur 2 zu erkennen, in die formschlüssig die Außenverriegelung, beispielsweise ein Schließzylinder 82, eingreift. Figur 12 zeigt den Einbauzustand, wobei der Schließzylinder 82 durch die Adapterplatte 34 ragt und in das Verbindungselement 10 greift.

## Patentansprüche

1. Schlossmodul für eine Kraftfahrzeugtür, mit einem Türschloss (30), einer Adapterplatte (34) für den Türaußengriff und einem Verbindungselement (10) für diese beiden Aggregate, wobei am Verbindungselement (10) ein Anschlussstück (12) angeordnet ist, das verschiebebeweglich relativ zum Türschloss (30) oder zur Adapterplatte (34) ist, wobei das Verbindungselement (10) eine Scharniereinrichtung (16) aufweist, mittels derer das Türschloss (30) relativ zu der Adapterplatte (34) verschwenkbar ist, und wobei die Scharniereinrichtung (16) mindestens einen Zapfen (66, 68) aufweist, der in eine komplementäre Aufnahme entweder an der Adapterplatte (34) oder am Türschloss (30) eingreift ,**dadurch gekennzeichnet, dass** an dem Verbindungselement (10) ein Arm (40) angeflanscht ist, an dem ein Außenverriegelungshebel (80) anzubringen ist, und dass die Anbindung des Außenverriegelungshebels (80) über einen Kugelkopf (48) erfolgt.

2. Schlossmodul nach Anspruch 1, **dadurch gekennzeichnet, dass** das Anschlusssstück (12) oder das Türschloss (30) oder die Adapterplatte (34) eine erste Einrichtung (60, 62) aufweist, die senkrecht zur Verschieberichtung nachgiebig verlagerbar ist.

3. Schlossmodul nach Anspruch 1 oder 2, **dadurch gekennzeichnet, dass** das Anschlusssstück (12) oder das Türschloss (30) oder die Adapterplatte (34) eine zweite Einrichtung (64) aufweist, die senkrecht zur Verschieberichtung und orthogonal zur Verlagerungsrichtung der ersten Einrichtung (60, 62) nachgiebig verlagerbar ist.

4. Schlossmodul nach Anspruch 2 oder 3, **dadurch gekennzeichnet, dass** die erste und die zweite Einrichtung jeweils aus mindestens einem Federband (60, 62, 64) gebildet sind.

5. Schlossmodul nach einem der Ansprüche 1 bis 4, **dadurch gekennzeichnet, dass** das Anschlusssstück (12) eine Nut (50) aufweist, die über ein Gegenstück (32) am Türschloss (30) oder an der Adapterplatte (34) zu schieben ist.

6. Schlossmodul nach Anspruch 5, **dadurch gekennzeichnet, dass** an zwei einander gegenüberliegenden Seiten der Nut (50) jeweils ein Federband (60, 62) angeordnet ist.

7. Schlossmodul nach Anspruch 5, **dadurch gekennzeichnet, dass** an der Oberseite der Nut (50) ein Federband (64) angeordnet ist.

8. Schlossmodul nach einem der Ansprüche 1 bis 7, **dadurch gekennzeichnet, dass** das Anschlußstück (12) einstückig mit dem Verbindungselement (10) ausgebildet ist.

9. Schlossmodul nach einem der Ansprüche 1 bis 4, **dadurch gekennzeichnet, dass** ein Gegenstück am Türschloss (30) oder an der Adapterplatte (34) eine Nut zum Schieben über das Anschlusssstück (12) und/oder einander gegenüberliegend an zwei Seiten angeordnete Federbänder (60, 62) und/oder ein Federband (64) an seiner Oberseite aufweist.

10. Schlosssmodul nach einem der Ansprüche 5 bis 9, **dadurch gekennzeichnet, dass** das Gegenstück (32) am Türschloss (30) vorgesehen ist.

11. Schlossmodul nach Anspruch 1, **dadurch gekennzeichnet, dass** für die Scharniereinrichtung (16) zwei einander gegenüberstehende, voneinander beabstandete Zapfen (66, 68) vorgesehen sind, die jeweils in eine Aufnahme (36, 38) eingreifen.

12. Schlossmodul nach Anspruch 11, **dadurch gekennzeichnet, dass** die Zapfen (66, 68) am Verbindungselement (10) aufeinander zu bewegbar angeordnet sind.

13. Schlossmodul nach Anspruch 12, **dadurch gekennzeichnet, dass** die mindestens eine Ausnehmung (36, 38) an der Adapterplatte (34) vorgesehen ist.

14. Schlossmodul nach Anspruch 1, **dadurch gekennzeichnet, dass** der Kugelkopf (48) an einem Koppelelement (46) angeordnet ist, das in einer Bohrung (44) im Arm (40) sitzt.

15. Schlossmodul nach Anspruch 14, **dadurch gekennzeichnet, dass** das Koppelelement (46) eine Vertiefung (90) aufweist, in die eine Außenvezriegelurig formschlüssig eingreift.

16. Schlossmodul nach Anspruch 15, **dadurch gekennzeichnet, daß** die Außenverriegelung ein Schließzylinder (82) ist.

17. Schlossmodul nach einem der Ansprüche 1 bis 16, **dadurch gekennzeichnet, dass** das Verbindungselement (10) aus Polybutylentherephthalat besteht.

## Claims

1. Lock module for a motor vehicle door comprising a door lock (30), an adapter plate (34) for the external door handle and a connecting element (10) for these two aggregates, in which a joining piece (12) is arranged on the connecting element (10) that is slideably displaceable in relation to the door lock (30) or to the adapter plate (34), in which the connecting element (10) contains a hinge arrangement (16) with the aid of which the door lock (30) is pivotable in relation to the adapter plate (34) and in which the hinge arrangement (16) contains at least one pin (66, 68) engaging in a complementary seat either on the adapter plate (34) or on the door lock (30), **characterized in that** an arm (40) is flange mounted to the connecting element (10), an external locking lever (80) is to be attached to said arm and that the external locking lever (80) is connected via a ball joint (48).

2. Lock module according to claim 1, **characterized in that** the joining piece (12) or the door lock (30) or the adapter plate (34) contain a first means (60, 62) flexibly displaceable perpendicularly to the sliding direction.

3. Lock module according to claim 1 or 2, **characterized in that** the joining piece (12) or the door lock (30) or the adapter plate (34) contain a second means (64) flexibly displaceable perpendicularly to the sliding direction and orthogonally to the displacement direction of the first means (60, 62).

4. Lock module according to claim 2 or 3, **characterized in that** the first and second means are each formed of at least one spring strip (60, 62, 64).

5. Lock module according to claims 1 to 4, **characterized in that** the adapter plate (12) contains a groove (50) to be slid over a counterpart (32) on the door lock (30) or on the adapter plate (34).

6. Lock module according to claim 5, **characterized in that** one spring strip (60, 62) is arranged on two sides of the groove (50) facing each other.

7. Lock module according to claim 5, **characterized in that** top of the groove (50) contains a spring strip (64).

8. Lock module according to claims 1 to 7, **characterized in that** the adapter plate (12) is designed as a single piece with the connecting element (10).

9. Lock module according to claims 1 to 4, **characterized in that** a counterpart on the door lock or on the adapter plate (34) contains a groove for sliding over the joining piece (12) and/or spring strips (60, 62) arranged on two sides and facing each other and/or a spring strip (64) on its upper side.

10. Lock module according to claim 5 to 9, **characterized in that** a counterpart (32) is provided on the door lock (30).

11. Lock module according to claim 1, **characterized in that** for the hinge arrangement (16) two facing pins (66, 68) arranged at a distance to each other, are provided, each engaging in a seat (36, 38).

12. Lock module according to claim 11, **characterized in that** the pins (66, 68) are arranged on the connecting element (10) so that they are a moveable towards each other.

13. Lock module according to claim 12, **characterized in that** the at least one recess (36, 38) is provided on the adapter plate (34).

14. Lock module according to claim 1, **characterized in that** the ball joint (48) is arranged on a coupling element (46) arranged in a hole (44) in an arm (40).

15. Lock module according to claim 14, **characterized in that** the coupling element (46) contains an indentation (90) to provide a positive-locking engagement with the external locking.

16. Lock module according to claim 15, **characterized in that** the external locking is a locking cylinder (82).

17. Lock module according to claims 1 to 16, **characterized in that** the connecting element (10) is made from polybutylene terephthalate.

## Revendications

1. Module de serrure pour un véhicule à moteur, avec une serrure de portière (30), une plaque d'adaptation (34) pour la poignée extérieur de portière et avec un élément de liaison (10) dans ces deux agrégats, à l'élément de liaison (10) étant disposée une pièce de raccordement (12) qui se déplace relativement par rapport à la serrure de portière (30) ou à la plaque d'adaptation (34), l'élément de liaison (10) présentant un dispositif à charnière (16) à l'aide duquel la serrure de portière (30) est pivotable relativement par rapport à la plaque d'adaptation (34) et le dispositif à charnière (16) présentant au moins un pion (66, 68) qui s'engrène dans un logement complémentaire soit à la plaque d'adaptation (34) soit à la serrure de portière (30) **caractérisé en ce que** à l'élément de liaison (10) est bridé un bras (40) auquel un levier de condamnation extérieur (80) doit être disposé et que la connexion du condamnation extérieur (80) s'effectue via une boule (48).

2. Module de serrure selon la revendication 1 **caractérisé en ce que** la pièce de raccordement (12) ou la serrure de portière (30) ou la plaque d'adaptation (34) présente un premier dispositif (60, 62) pouvant être déplacé verticalement de façon flexible par rapport au dispositif de coulisse.

3. Module de serrure selon la revendication 1 ou 2 **caractérisé en ce que** la pièce de raccordement (12) ou la serrure de portière (30) ou la plaque d'adaptation (34) présente un deuxième dispositif (64) pouvant être déplacé de façon flexible verticalement par rapport au dispositif de coulisse et orthogonalement par rapport au dispositif de déplacement du premier dispositif (60, 62).

4. Module de serrure selon la revendication 2 ou 3 **caractérisé en ce que** le premier dispositif et le deuxième dispositif sont formés respectivement d'au moins une bande élastique (60, 62, 64).

5. Module de serrure selon l'une des revendications 1 à 4 **caractérisé en ce que** la pièce de raccordement (12) présente une rainure (50) devant être poussée via une contre-pièce (32) à la serrure de portière (30) ou à la plaque d'adaptation (34).

6. Module de serrure selon la revendication 5 **caractérisé en ce qu'**aux deux côtés opposés de la rainure (50), une bande élastique (60, 62) est respectivement disposée.

7. Module de serrure selon la revendication 5 **caractérisé en ce qu'**une bande élastique (64) est disposée à la partie supérieure de la rainure (50).

8. Module de serrure selon l'une des revendications 1 à 7 **caractérisé en ce que** la pièce de raccordement (12) est formée en une seule pièce avec l'élément de liaison (10).

9. Module de serrure selon l'une des revendications 1 à 4 **caractérisé en ce que** une contre-pièce présente à la serrure de portière (30) ou à la plaque d'adaptation (34) une rainure pour coulisser via l'pièce de raccordement (12) et/ou les bandes élastiques (60, 62) placées de façon opposée aux deux côtés et/ou une bande élastique (64) sur son côté supérieure.

10. Module de serrure selon l'une des revendications 5 à 9 **caractérisé en ce que** la contre-pièce (32) est prévue à la serrure de portière (30).

11. Module de serrure selon la revendication 1 **caractérisé en ce que** pour le dispositif à charnière (16) sont prévus deux pions (66, 68) opposés, placés à une distance l'un de l'autre s'engrenant respectivement dans un logement (36, 38).

12. Module de serrure selon la revendication 11 **caractérisé en ce que** les pions (66, 68) sont disposés de façon mobile l'un sur l'autre à l'élément de liaison (10).

13. Module de serrure selon la revendication 12 **caractérisé en ce que** l'une des cavités (36, 38) au moins est prévue à la plaque d'adaptation (34).

14. Module de serrure selon la revendication 1 **caractérisé en ce que** la boule (48) est disposée à un élément de couplage (46) qui est placé dans un trou (44) dans le bras (40).

15. Module de serrure selon la revendication 14 **caractérisé en ce que** l'élément de couplage (46) présente un creux (90) dans lequel une condamnation extérieure s'engrène de façon crabotée.

16. Module de serrure selon la revendication 15 **caractérisé en ce que** la condamnation extérieure est un cylindre de fermeture (82).

17. Module de serrure selon l'une des revendications 1 à 16 **caractérisé en ce que** l'élément de liaison (10) se compose de polybutènetéréphtalate.
